Europäisches Patentamt

European Patent Office

Office européen des brevets

(19)

(11) **EP 0 735 801 B1**

(12) **FASCICULE DE BREVET EUROPEEN**

(45) Date de publication et mention
de la délivrance du brevet:
**29.08.2001 Bulletin 2001/35**

(51) Int Cl.[7]: **H05B 41/295**, H02M 7/5387

(21) Numéro de dépôt: **96400642.3**

(22) Date de dépôt: **27.03.1996**

(54) **Perfectionnements aux dispositifs d'alimentation de lampes à décharge de projecteurs de véhicules automobiles**

Verbesserungen in Schaltungen zum Betreiben von Entladungslampen in Fahrzeugscheinwerfern

Improvements in devices for operating discharge lamps in vehicle headlamps

(84) Etats contractants désignés:
**DE ES GB IT**

(30) Priorité: **29.03.1995 FR 9503720**

(43) Date de publication de la demande:
**02.10.1996 Bulletin 1996/40**

(73) Titulaire: **VALEO ELECTRONIQUE**
**94000 Creteil (FR)**

(72) Inventeurs:
 • **Cassese, Bruno**
 **94000 Creteil (FR)**
 • **Wacheux, Patrick**
 **94800 Villejuif (FR)**

 • **Paul, Gilles**
 **92260 Fontenay aux Roses (FR)**
 • **Nicolai,Jean-Marc**
 **92400 Courbevoie (FR)**
 • **Herzberger, Eric**
 **93220 Gagny (FR)**

(74) Mandataire: **Le Forestier, Eric**
 **Cabinet Régimbeau**
 **20, rue de Chazelles**
 **75847 Paris cedex 17 (FR)**

(56) Documents cités:
 **EP-A- 0 567 108        DE-A- 4 322 384**
 **DE-A- 4 400 412**

## Description

La présente invention est relative à un dispositif d'alimentation d'une lampe à décharge de projecteur de véhicule automobile.

Elle concerne également des projecteurs comportant de tels dispositifs.

Il a récemment été proposé d'alimenter les lampes à décharge, en régime nominal, par des courants alternatifs de forme carrée à une fréquence de l'ordre de 200 Hz à 1 kHz selon les lampes. Ce fonctionnement alternatif permet, par rapport à un fonctionnement en continu, d'augmenter considérablement la durée de vie de la lampe.

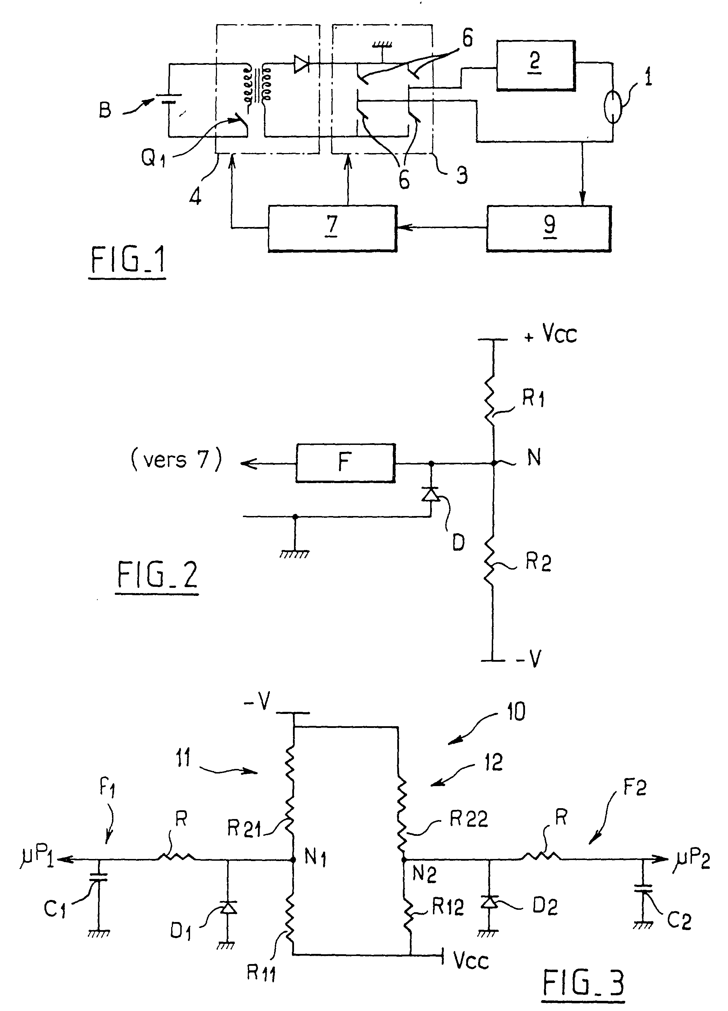

On a représenté schématiquement sur la figure 1 un circuit d'alimentation permettant un tel fonctionnement. La lampe à décharge, référencée par 1, y est montée en série avec un module 2 pour la génération d'une impulsion Haute Tension d'amorçage et est alimentée en tension par un convertisseur continu/alternatif 3 en aval d'un convertisseur continu/continu 4 recevant en entrée la tension (12 V) de la batterie B du véhicule.

Le convertisseur 3 continu/alternatif peut être un pont en H de quatre interrupteurs 6 commandés par un microprocesseur 7.

L'une des bornes d'entrée du convertisseur continu/alternatif 3 est reliée au neutre, l'autre extrémité du convertisseur 3 étant à un potentiel négatif fourni par le convertisseur continu/continu 4. Cette polarité négative est en effet nécessaire si l'on veut préserver la durée de vie de la lampe 1, dont les cations ont sinon tendance à être attirés par les parois métalliques du réflecteur du projecteur et à s'accumuler sur la surface interne du bulbe, ce qui a pour conséquence de l'opacifier.

Le convertisseur 4 continu/continu est par exemple un circuit de type dit "monoflyback" et comprend un transformateur 8 dont le primaire est alimenté par l'intermédiaire d'un interrupteur Q1 commandé par le microprocesseur 7.

Plus précisément, en régime nominal, la tension est imposée par la lampe 1 et varie entre 65 et 125 V. Le microprocesseur 7 commande l'interrupteur Q1, de façon à asservir l'intensité du courant dans la lampe 1 pour que la puissance fournie à la lampe soit maintenue à 35 W $\pm$ 1W.

A l'allumage, la tension en sortie du convertisseur continu/continu 4 est maintenue à environ 400 V avant l'amorçage, puis descend à 30 V ou 100 V en fonction de l'état précédent de la lampe. Cette première phase étant ensuite suivie par une phase de montée en puissance (qui précède le fonctionnement en régime nominal) au cours de laquelle on fait croître la puissance aux bornes de la lampe 1 jusqu'à 90 W, l'intensité du courant traversant la lampe étant maintenue inférieure à 2,6 A.

Pour permettre cet asservissement, le dispositif d'alimentation comporte des moyens 9, reliés au microprocesseur 7, pour la mesure de l'intensité et de la tension dans la lampe 1.

Ces moyens sont par exemple réalisés par un microcontroleur, qui mesure des tensions comprises entre 0 et une valeur de tension maximale qui est généralement de 0,5 V, le microcontroleur risquant d'être gravement endommagé si cette valeur de tension maximale est dépassée.

Un but de l'invention est de proposer des moyens de mesure particulièrement adaptés à la nouvelle génération de dispositifs d'alimentation de lampes à décharge.

A cet effet, le dispositif d'alimentation selon l'invention est un dispositif d'alimentation d'une lampe à décharge de projecteur de véhicule automobile comportant un convertisseur continu/continu, alimenté en entrée par une source de tension continue, telle que la batterie du véhicule, un convertisseur conti-nu/alternatif dont la sortie alimente la lampe à décharge, des moyens pour la mesure de la tension et de l'intensité dans la lampe à décharge, une unité reliée auxdits moyens pour la commande du convertisseur continu/continu en fonction de la tension et de l'intensité relevées par lesdits moyens de mesure, le convertisseur continu/alternatif présentant deux bornes d'entrée, l'une étant reliée au neutre, l'autre étant alimentée par une tension négative fournie par le convertisseur continu/continu, caractérisé en ce que les moyens de mesure comportent des moyens pour convertir la tension aux bornes de moyens résistifs en entrée du convertisseur continu/alternatif en une tension de sortie positive représentative du courant traversant le convertisseur continu/alternatif et en ce que l'unité de commande comprenant un microprocesseur sur lequel ladite tension de sortie est envoyée pour être traitée par un convertisseur analogique/numérique en entrée dudit microprocesseur, un interrupteur étant monté en parallèle sur les moyens résistifs en entrée du convertisseur continu/alternatif, cet interrupteur étant commandé par un microprocesseur de façon à être fermé entre les échantillonnages de la tension de sortie.

Comme le comprendra dans la suite du présent texte, un tel montage permet de diminuer les pertes joules dans les moyens résistifs en entrée du convertisseur continu/alternatif.

Il permet également un gain important en encombrement sur lesdits moyens résistifs.

Avantageusement, également, le dispositif comporte en outre des moyens pour convertir une tension négative en un point du convertisseur continu/alternatif en une tension de sortie positive représentative de la tension en entrée du convertisseur continu/alternatif.

Par ailleurs, comme on l'aura compris, les tensions et intensités de courant en entrée du convertisseur continu/alternatif subissent de grosses variations dynamiques, puisqu'en cours de fonctionnement, la tension d'alimentation prend des valeurs variant de 400 à 30 V, tandis que les intensités varient de 0 à 2,6 ampères.

Un autre but de l'invention est donc de proposer des moyens de mesure qui permettent une grande précision de mesure sur toute la gamme d'intensité et de tension de fonctionnement de la lampe.

A cet effet, le dispositif selon l'invention est avantageusement complété par les différentes caractéristiques suivantes :

- les moyens de mesure présentent plusieurs sorties de tensions représentatives de la tension en entrée du convertisseur continu/alternatif, chacune de ces sorties permettant une mesure de précision dans une sous-gamme particulière de la gamme de tension de fonctionnement de la lampe à décharge ;
- les moyens de mesure présentent plusieurs sorties de tensions représentatives de l'intensité du courant traversant le convertisseur continu/alternatif, chacune de ces sorties permettant une mesure de précision dans une sous-gamme particulière de la gamme d'intensité de fonctionnement de la lampe à décharge.

Egalement, le dispositif d'alimentation selon l'invention est avantageusement complété par les différentes caractéristiques suivantes, prises seules ou selon toutes leurs combinaisons techniquement possibles :

- les moyens de mesure comportent au moins un pont diviseur comprenant :

  . des moyens résistifs montés entre une sortie de tension représentative de la tension du convertisseur continu/alternatif et un point à une tension négative du convertisseur continu/alternatif,
  . des moyens résistifs montés entre ladite sortie de tension et une source de tension positive (qui est la référence de mesure du µp),
  . une diode dont la cathode est reliée à ladite sortie de tension et dont l'anode est reliée au neutre pour la protection des moyens de mesure,

- les moyens de mesure comportent plusieurs tels ponts diviseurs montés en parallèle entre la source de tension positive et un même point du convertisseur continu/alternatif, les moyens résistifs entre la sortie de tension et la source de tension positive étant pour chaque pont adaptés à la sous-gamme de tension dans laquelle ledit pont permet une mesure de précision,
- les moyens résistifs en entrée du convertisseur continu/alternatif sont montés entre le neutre et l'entrée dudit convertisseur reliée au neutre et en ce que les moyens de mesure comportent un montage amplificateur inverseur dont la sortie alimente une sortie de tension positive représentative du courant traversant le convertisseur continu/alternatif,
- le montage amplificateur comporte plusieurs étages d'amplification correspondant chacun à une sous-gamme de la gamme d'intensité du courant de fonctionnement traversant le convertisseur continu/alternatif,
- les moyens de mesure comportent un microcontroleur à système numérique qui comprend des moyens mémoire de type EEPROM pour la calibration de la mesure.

L'invention concerne également un projecteur à lampe à décharge, caractérisé en ce qu'il comporte un dispositif d'alimentation de ce type.

D'autres caractéristiques et avantages de l'invention ressortiront encore de la description qui suit. Cette description est purement illustrative et non limitative. Elle doit être lue en regard des dessins annexés sur lesquels :

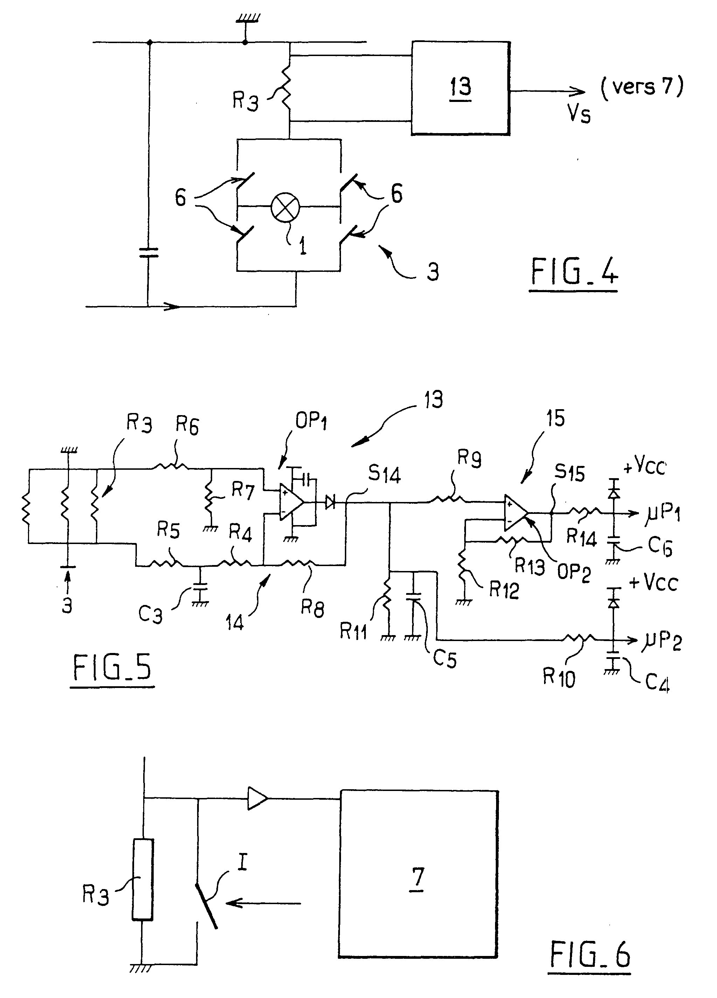

- . la figure 1, déjà analysée, est une représentation schématique d'un dispositif d'alimentation de lampe à décharge ;
- . les figures 2 et 3 sont des schémas illustrant la mesure de tension mise en oeuvre par les dispositifs conformes à l'invention ;
- . la figure 4 est un schéma illustrant la mesure d'intensité mise en oeuvre par les dispositifs conformes à l'invention
- . la figure 5 est un schéma du montage d'un mode de réalisation possible pour l'invention ;
- . la figure 6 illustre un perfectionnement avantageux de l'invention.

Le montage diviseur de tension illustré sur la figure 2 comporte deux résistances R1 et R2 reliées à une extrémité commune (point N) et alimentées en tension à leurs extrémités opposées l'une (résistance R1) à une tension continue de +Vcc, l'autre (résistance R2) à la tension -V du pont en H, qui est la tension que l'on cherche à mesurer.

Le point N est relié à la cathode d'une diode D, dont l'anode est reliée au neutre. La tension au point N est injectée, à travers une unité de filtrage F, sur un convertisseur analogique/numérique (non représenté) en entrée du microprocesseur 7 du dispositif d'alimentation.

La tension +Vcc est par exemple de 4,8 V. Elle sert avantageusement de référence aux différents convertisseurs analogiques/numériques du microprocesseur 7.

Comme on le comprendra aisément, un tel montage de type "pull-up" permet de convertir la tension négative -V du pont en H, en une tension positive (point N) comprise entre 0 et 4,8 Volts à partir de laquelle le microprocesseur 7 calcule la tension de la lampe à décharge 1.

Etant donné que la tension aux bornes du pont en H peut varier de 30 à 450 V, on utilise avantageusement un montage, tel qu'illustré sur la figure 3, présentant n ponts diviseurs, chaque pont permettant de mesurer une plage de tensions spécifique avec une précision suffisante à la réalisation de l'asservissement de puissance.

Sur le montage 10 de la figure 3, deux ponts 11 et 12 du type de celui de la figure 2 sont montés en parallèle entre la tension + Vcc et la tension -V.

Les ponts 11 et 12 comportent chacun une résistance R11, R12, dont une extrémité est au potentiel +Vcc et dont l'autre extrémité (points Ni, N2) est reliée à une résistance R21, R22, dont l'autre côté est au potentiel -V.

Les points N1 et N2 sont, de la même façon que le point N sur la figure 2, reliés :

- d'une part, à la cathode d'une diode D1, D2, dont l'anode est reliée au neutre, et,
- d'autre part, à unité de filtrage F1, F2, qui est en amont d'un convertisseur analogique/numérique monté en entrée ($\mu$p1, $\mu$p2) du microprocesseur 7.

Les résistances R21 et R22 sont toutes deux de valeurs égales à 20 kOhms. Elles sont dimensionnées pour supporter la tension du pont.

Les valeurs des résistances R11 et R12 sont choisies de façon que les ponts 11 et 12 assurent chacun une mesure précise dans une gamme de tension complémentaire de celle de l'autre.

La résistance R11 est égale à 4,87 kOhms.

La résistance R12 est égale à 2,49 kOhms.

Les deux unités de filtrage F1, F2 sont constituées de façon connue en soi, par une résistance R (10 kOhms) et un condensateur C1, C2 (de capacité égale respectivement à 0,01 $\mu$F et 4,7 nF) monté entre la sortie de cette résistance R et le neutre.

Le pont 11 permet une mesure précise jusqu'à 200 V.

Le pont 12 permet d'étendre la gamme de mesure jusqu'à 400 V.

On a illustré sur la figure 4 le principe de la mesure de courant mise en oeuvre par le dispositif l'invention.

Une résistance R3 est montée en série avec le pont 3 en H entre le neutre et l'entrée dudit pont 3 qui est reliée au neutre. Une interface de mesure 13 est montée en parallèle avec cette résistance R3. La tension vs en sortie de cette interface 13 est une tension positive proportionnelle au courant traversant la résistance R3. Cette tension vs est injectée dans un convertisseur analogique/numérique en entrée du microprocesseur 7.

Ainsi qu'on l'a illustré sur la figure 5, cette interface 13 comporte plusieurs étages, référencés par 14 et 15, permettant chacun de mesurer précisément une gamme particulière d'intensité.

Sur la figure 5, la résistance de R3 a été schématisée par trois résistances en parallèle, chacune de valeur 1,1 Ohms et apte à supporter 3 w en transitoire.

Le premier étage 14 de cet interface 13 constitue un amplificateur inverseur. Il comporte un amplificateur opérationnel OP1, dont l'entrée inverseuse est reliée à une résistance R4 de 10 kOhms.

L'autre extrémité de cette résistance R4 est reliée, d'une part, à un condensateur C3 dont la capacité est égale à 0,1 $\mu$F et, d'autre part, à une résistance R5 de 1 kOhms elle-même reliée à un point entre la résistance R3 et le pont 3 en H.

L'entrée non inverseuse de l'amplificateur OP1 est reliée au neutre par l'intermédiaire de deux résistances R6 et R7 montées en parallèle, ces deux résistances étant respectivement de valeurs égales à 11 kOhms et 32 kOhms.

Une résistance R8 de réaction est montée entre la sortie S14 de l'amplificateur OP1 et son entrée inverseuse. Cette résistance R8 a une valeur de 33,2 kOhms.

Cette sortie S14 est reliée, par l'intermédiaire d'une résistance R9 de 5,9 kOhms, à l'entrée non inverseuse d'un amplificateur opérationnel OP2 que présente le deuxième étage d'amplification 15.

La tension de cette sortie S14 est par ailleurs injectée sur une entrée $\mu$p2 d'un convertisseur analogique/numérique du microprocesseur 7, par l'intermédiaire d'une résistance R10 de 10 kOhms.

L'extrémité par laquelle cette résistance R10 est reliée au convertisseur précité est également reliée :

- d'une part, à un condensateur C4 de 4,7 nF relié au neutre,
- d'autre part, à la source de tension +Vcc, par l'intermédiaire d'une diode qui est conductrice de ladite résistance R10 vers ladite source.

Egalement, la sortie S14 est reliée au neutre par l'intermédiaire d'une résistance R11 de 4,7 kOhms montées en parallèle avec un condensateur C5 de 4,7 nF.

Le deuxième étage d'amplification 15 constitue un montage non inverseur.

L'entrée inverseuse de l'amplificateur OP2 est reliée à une résistance R12 de 5,9 kOhms, dont l'autre extrémité est reliée au neutre.

Une résistance R13 de réaction est montée entre l'entrée inverseuse et la sortie S15 de l'amplificateur Op2. Cette sortie S15 est reliée par une résistance R14 de 10 kOhms à une entrée $\mu$p1 d'un autre convertisseur analogique/numérique du microprocesseur 7.

Cette entrée $\mu$p1 est de la même façon que l'entrée $\mu$p2 protégée par un condensateur C6 de 0,01 $\mu$F relié au neutre et par une diode reliée par sa cathode à la source de tension +$V_{CC}$.

La sortie $\mu$p1 permet des mesures précises pour des intensités comprises entre 0 et 0,8 A ; la sortie µp2 permet des mesures précises d'intensités comprises entre 0,8 et 5 A.

Sur la figure 6, on a illustré une caractéristique des dispositifs conformes à l'invention.

Selon cette caractéristique, la résistance R3 aux bornes de laquelle la tension est mesurée, est montée en parallèle avec un interrupteur I commandé de façon à être synchronisé sur l'échantillonnage du microprocesseur 7 pour n'être ouvert que lorsque le microprocesseur 7 réalise l'échantillonnage des tensions qu'il reçoit et à être fermé le reste du temps.

Ce montage permet de diminuer les pertes Joule de la résistance R3. Elle permet également un gain quant à l'encombrement de la résistance R3 selon les phases de fonctionnement (2 % pour les phases d'allumage, 50 % en amorçage).

On notera en particulier que le temps d'échantillonnage par le microprocesseur 7 représente entre 2 et 50 % du temps de fonctionnement.

Ce perfectionnement permet de diviser par dix le dimensionnement de la résistance R3, ainsi que les pertes calorifiques.

Les mesures d'intensité et de tension que permettent les moyens qui viennent d'être décrits sont utilisées par le microprocesseur 7 pour calculer par logiciel la tension de la lampe :

$$V_{lampe} = W_{pont} - R_3 \times I_{pont}$$

et asservir avec précision la puissance fournie à la lampe, cette puissance étant calculée à partir de la formule :

$$P_{lampe} = V_{lampe} \times I_{lampe}$$

où $I_{lampe}$ est l'intensité du courant traversant la lampe.

De plus, il est prévu une calibration en usine avec une valeur d'intensité de 2,6 A ± 1 60 mA et une valeur de puissance de 35 W ± 1 W.

Ces informations sont stockées dans des mémoires EEPROM du microprocesseur 7.

Un mode dégradé, avec des paramètres nuls de calibration, est prévu en cas d'anomalies sur le logiciel d'asservissement.

Le projecteur conforme à l'invention n'a pas été particulièrement représenté sur les figures. Il est constitué par un projecteur à lampe à décharge connu en soi de l'Homme du Métier, complété par un dispositif d'alimentation du type de celui qui vient d'être décrit.

## Revendications

1. Dispositif d'alimentation d'une lampe à décharge (1) de projecteur de véhicule automobile comportant un convertisseur continu/continu (4), alimenté en entrée par une source de tension continue (B), telle que la batterie du véhicule, un convertisseur continu/alternatif (3) dont la sortie alimente la lampe à décharge (1), des moyens (9, 10, 13) pour la mesure de la tension et de l'intensité dans la lampe à décharge (1), une unité (7) reliée auxdits moyens (9) pour la commande du convertisseur continu/continu (4) en fonction de la tension et de l'intensité relevées par lesdits moyens de mesure (9), le convertisseur continu/alternatif (3) présentant deux bornes d'entrée, l'une étant reliée au neutre, l'autre étant alimentée par une tension négative (-V) fournie par le convertisseur continu/continu (4), **caractérisé en ce que** les moyens de mesure (9, 10, 13) comportent des moyens (13) pour convertir la tension aux bornes de moyens résistifs (R3) en entrée du convertisseur continu/alternatif (3) en une tension de sortie positive (vs) représentative du courant traversant le convertisseur continu/alternatif (3) et en ce que l'unité de commande comprenant un microprocesseur (7) sur lequel ladite tension de sortie est envoyée pour être traitée par un convertisseur analogique/numérique en entrée dudit microprocesseur (7), un interrupteur (I) étant monté en parallèle sur les moyens résistifs (R3) en entrée du convertisseur continu/alternatif (3), cet interrupteur (I) étant commandé par un microprocesseur (7) de façon à être fermé entre les échantillonnages de la tension de sortie.

2. Dispositif selon la revendication 1, **caractérisé en ce qu'**il comporte en outre des moyens (10) pour convertir une tension négative en un point du convertisseur continu/alternatif (3) en une tension de sortie positive représentative de la tension en entrée du convertisseur continu/alternatif (3).

3. Dispositif selon l'une des revendications 1 ou 2, **caractérisé en ce que** les moyens de mesure (10) présentent plusieurs sorties de tensions (µp1,µp2) représentatives de la tension en entrée du convertisseur continu/alternatif (3), chacune de ces sorties (µp1,µp2) permettant une mesure de précision dans une sous-gamme particulière de la gamme de tension de fonctionnement de la lampe à décharge (1).

4. Dispositif selon l'une des revendications précédentes, **caractérisé en ce que** les moyens de mesure présentent plusieurs sorties (µp1,µp2) de tensions représentatives de l'intensité du courant traversant le convertisseur continu/alternatif (3), chacune de ces sorties (µp1,µ p2) permettant une mesure de précision dans une sous-gamme particulière de la gamme d'intensité de fonctionnement de la lampe à décharge (1).

5. Dispositif selon la revendication 2, prise seule ou en combinaison avec l'une des revendications 3 et 4, **caractérisé en ce que** les moyens de mesure (10) comportent au moins un pont diviseur (11, 12) comprenant :

- des moyens résistifs (R2, R21, R22) montés entre une sortie de tension représentative de la tension (N, Ni, N2) du convertisseur continu/alternatif et un point à une tension négative du convertisseur continu/alternatif (3),
- des moyens résistifs (R1, R11, R12) montés entre ladite sortie de tension (N, N1, N2) et une source de tension positive (+VCC),
- une diode (D, D1, S2) dont la cathode est reliée à ladite sortie de tension (N, N1, N2) et dont l'anode est reliée au neutre pour la protection des moyens de mesure.

6. Dispositif selon les revendications 3 et 5 prises en combinaison, **caractérisé en ce que** les moyens de mesure (10) comportent plusieurs tels ponts diviseurs (11, 12) montés en parallèle entre la source de tension positive (+VCC) et un même point du convertisseur continu/alternatif (3), les moyens résistifs (R1, R11, R12) entre la sortie de tension (N, N1, N2) et la source de tension positive (+VCC) étant pour chaque pont (11, 12) adaptés à la sous-gamme de tension dans laquelle ledit pont (11, 12) permet une mesure de précision.

7. Dispositif selon l'une des revendications précédentes, **caractérisé en ce que** les moyens résistifs (R3) en entrée du convertisseur continu/alternatif (3) sont montés entre le neutre et l'entrée dudit convertisseur (3) reliée au neutre et en ce que les moyens de mesure comportent un montage amplificateur-inverseur (13) dont la sortie alimente une sortie de tension positive (vs) représentative du courant traversant le convertisseur continu/alternatif (3).

8. Dispositif selon les revendications 4 et 7 prises en combinaison, **caractérisé en ce que** le montage amplificateur (13) comporte plusieurs étages d'amplification (14, 15) correspondant chacun à une sous-gamme de la gamme d'intensité du courant de fonctionnement traversant le convertisseur continu/alternatif (3)

9. Dispositif selon l'une des revendications précédentes **caractérisé en ce que** les moyens de mesure comportent un microcontrôleur à système numérique qui comprend des moyens mémoires de type EEPROM pour la calibration de la mesure.

10. Projecteur à lampe à décharge, **caractérisé en ce qu'**il comporte un dispositif d'alimentation selon l'une des revendications précédentes.

**Patentansprüche**

1. Versorgungseinrichtung für eine Entladungslampe (1) eines Kraftfahrzeugscheinwerfers mit einem Gleichspannungswandler (4), der am Eingang von einer Gleichspannungsquelle (B), zum Beispiel der Fahrzeugbatterie, gespeist wird, einem Wechselrichter (3), dessen Ausgang die Entladungslampe (1) speist, Mitteln (9, 10, 13) zum Messen der Spannung und der Stromstärke in der Entladungslampe (1), einer Einheit (7), die mit diesen Mitteln (9) verbunden ist, um den Gleichspannungswandler (4) in Abhängigkeit der von den genannten Meßmitteln (9) ermittelten Spannung und Stromstärke zu steuern, wobei der Wechselrichter (3) zwei Eingangsklemmen aufweist, von denen eine mit dem Nullleiter verbunden ist und die andere von einer vom Gleichspannungswandler (4) gelieferten negativen Spannung (-V) gespeist wird,
**dadurch gekennzeichnet**, daß die Meßmittel (9, 10, 13) Mittel (13) umfassen, um die Spannung an den Klemmen der resistiven Mittel (R3) am Eingang des Wechselrichters (3) in eine positive Ausgangsspannung (vs) umzuwandeln, die für den durch den Wechselrichter (3) fließenden Strom repräsentativ ist, und daß die Steuereinheit einen Mikroprozessor (7) umfaßt, an den die genannte Ausgangsspannung weitergeleitet wird, um von einem Analog-Digital-Wandler am Eingang dieses Mikroprozessors (7) verarbeitet zu werden, wobei ein Schalter (I) an den resistiven Mitteln (R3) am Eingang des Wechselrichters (3) parallel geschaltet ist und dieser Schalter (I) von einem Mikroprozessor (7) gesteuert wird, so daß er zwischen den Messungen der Ausgangsspannung geschlossen ist.

2. Einrichtung nach Anspruch 1,
**dadurch gekennzeichnet**, daß sie ferner Mittel (10) umfaßt, um eine negative Spannung in einem Punkt des Wechselrichters (3) in eine positive Ausgangsspannung umzuwandeln, die für die Spannung am Eingang des Wechselrichters (3) repräsentativ ist.

3. Einrichtung nach einem der Ansprüche 1 oder 2,
**dadurch gekennzeichnet**, daß die Meßmittel (10) mehrere Spannungsausgänge ($\mu$p1, $\mu$p2) aufweisen, deren Spannungen für die Spannung am Eingang des Wechselrichters (3) repräsentativ sind, wobei jeder dieser Ausgänge ($\mu$p1, $\mu$p2) eine Präzisionsmessung in einem bestimmten Teilbereich des Betriebsspannungsbereichs der Entladungslampe (1) ermöglicht.

4. Einrichtung nach einem der vorhergehenden Ansprüche,
**dadurch gekennzeichnet**, daß die Meßmittel mehrere Spannungsausgänge ($\mu$p1, $\mu$p2) aufweisen,

deren Spannungen für die Stromstärke des durch den Wechselrichter (3) fließenden Stroms repräsentativ sind, wobei jeder dieser Ausgänge (μp1, μp2) eine Präzisionsmessung in einem bestimmten Teilbereich des Betriebsstromstärkebereichs der Entladungslampe (1) ermöglicht.

5. Einrichtung nur nach Anspruch 2 oder nach Anspruch 2 in Verbindung mit einem der Ansprüche 3 oder 4,
**dadurch gekennzeichnet**, daß die Meßmittel (10) mindestens eine Teilungsbrücke (11, 12) mit folgenden Einrichtungen umfassen:

- resistive Mittel (R2, R21, R22), die zwischen einen Spannungsausgang mit einer für die Spannung (N, N1, N2) des Wechselrichters repräsentativen Spannung und einen Punkt mit negativer Spannung des Wechselrichters (3) geschaltet sind,
- resistive Mittel (R1, R11, R12), die zwischen diesen Spannungsausgang (N, N1, N2) und eine positive Spannungsquelle (+VCC) geschaltet sind,
- eine Diode (D, D1, S2), deren Kathode mit dem genannten Spannungsausgang (N, N1, N2) und deren Anode zum Schutz der Meßmittel mit dem Nullleiter verbunden ist.

6. Einrichtung nach Anspruch 3 in Verbindung mit Anspruch 5,
**dadurch gekennzeichnet**, daß die Meßmittel (10) mehrere derartige Teilungsbrücken (11, 12) umfassen, die zwischen die positive Spannungsquelle (+VCC) und denselben Punkt des Wechselrichters (3) parallel geschaltet sind, wobei die resistiven Mittel (Rl, R11, R12) zwischen dem Spannungsausgang (N, N1, N2) und der positiven Spannungsquelle (+VCC) im Fall jeder Brücke (11, 12) auf den Spannungsteilbereich abgestimmt sind, in dem diese Brücke (11, 12) eine Präzisionsmessung ermöglicht.

7. Einrichtung nach einem der vorhergehenden Ansprüche,
**dadurch gekennzeichnet**, daß die resistiven Mittel (R3) am Eingang des Wechselrichters (3) zwischen den Mullleiter und den mit dem Nullleiter verbundenen Eingang dieses Wechselrichters (3) geschaltet sind und daß die Meßmittel eine Verstärker- und Umkehrschaltung (13) umfassen, deren Ausgang einen Ausgang der positiven Spannung (vs) speist, die für den durch den Wechselrichter (3) fließenden Strom repräsentativ ist.

8. Einrichtung nach Anspruch 4 in Verbindung mit Anspruch 7,
**dadurch gekennzeichnet**, daß die Verstärkerschaltung (13) mehrere verstärkerstufen (14, 15) umfaßt, die jeweils einem Teilbereich des Stromstärkebereichs des Betriebsstroms entsprechen, der durch den Wechselrichter (3) fließt.

9. Einrichtung nach einem der vorhergehenden Ansprüche,
**dadurch gekennzeichnet**, daß die Meßmittel einen digitalen Mikrocontroler umfassen, der Speichervorrichtungen des Typs EEPROM zur Kalibrierung der Messung aufweist.

10. Scheinwerfer mit Entladungslampe,
**dadurch gekennzeichnet**, daß er eine Versorgungseinrichtung nach einem der vorhergehenden Ansprüche umfaßt.

## Claims

1. Device for supplying a motor vehicle headlight discharge lamp (1), having a DC to DC converter (4), supplied at its input by a DC voltage source (B), such as the vehicle battery, a DC to AC converter (3) whose output supplies the discharge lamp (1), means (9, 10, 13) for measuring the voltage and current in the discharge lamp (1), a unit (7) connected to said means (9) for controlling the DC to DC converter (4) according to the voltage and current recorded by the said measuring means (9), the DC to AC converter (3) having two input terminals, one being connected to neutral, the other being supplied by a negative voltage (-V) supplied by the DC to DC converter (4), **characterised in that** the measuring means (9, 10, 13) include means (13) for converting the voltage at the terminals of resistive means (R3) at the input of the DC to AC converter (3) into a positive output voltage (vs) representing the current passing through the DC to AC converter (3) and in that the control unit comprising a microprocessor (7) to which the said output voltage is sent in order to be processed by an analogue to digital converter at the input of the said microprocessor (7), a switch (I) being connected in parallel to the resistive means (R3) at the input of the DC to AC converter (3), this switch (I) being controlled by a microprocessor (7) so as to be closed between the samplings of the output voltage.

2. Device according to Claim 1, **characterised in that** it also has means (10) for converting a negative voltage at one point on the DC to AC converter (3) into a positive output voltage representing the voltage at the input of the DC to AC converter (3).

3. Device according to one of Claims 1 or 2, **characterised in that** the measuring means (10) have several voltage outputs (μp1, μp2) representing the

voltage at the input of the DC to AC converter (3), each of these outputs ($\mu$p1, $\mu$p2) allowing a precision measurement in a particular subrange of the operating voltage range of the discharge lamp (1).

4. Device according to one of the preceding claims, **characterised in that** the measuring means have several voltage outputs ($\mu$p1, $\mu$p2) representing the intensity of the current passing through the DC to AC converter (3), each of these outputs ($\mu$p1, $\mu$p2) allowing a precision measurement in a particular subrange of the operating current range of the discharge lamp (1).

5. Device according to Claim 2, taken alone or in combination with one of Claims 3 and 4, **characterised in that** the measuring means (10) include at least one divider network (11, 12) comprising:

   - resistive means (R2, R21, R22) connected between a voltage output representing the voltage (N, N1, N2) of the DC to AC converter and a point at a negative voltage on the DC to AC converter (3),

   - resistive means (R1, R11, R12) connected between the said voltage output (N, N1, N2) and a positive voltage source (+VCC),

   - a diode (D, D1, S2) whose cathode is connected to the said voltage output (N, N1, N2) and whose anode is connected to neutral in order to protect the measuring means.

6. Device according to Claims 3 and 5 taken in combination, **characterised in that** the measuring means (10) include several such divider networks (11, 12) connected in parallel between the positive voltage source (+VCC) and the same point on the DC to AC converter (3), the resistive means (R1, R11, R12) between the voltage output (N, N1, N2) and the positive voltage source (+VCC) being, for each network (11, 12) adapted to the voltage subrange in which the said network (11, 12) allows a precision measurement.

7. Device according to one of the preceding claims, **characterised in that** the resistive means (R3) at the input of the DC to AC converter (3) are connected between neutral and the input to the said converter (3) connected to neutral and in that the measuring means include an amplifier-inverter circuit (13) whose output supplies a positive voltage output (vs) representing the current passing through the DC to AC converter (3).

8. Device according to Claims 4 and 7 taken in combination, **characterised in that** the amplifier circuit (13) has several amplification stages (14, 15) each corresponding to a subrange of the intensity range of the operating current passing through the DC to AC converter (3).

9. Device according to one of the preceding claims, **characterised in that** the measuring means include a microcontroller with a digital system which comprises memory means of the EEPROM type for calibrating the measurement.

10. Headlight with discharge lamp, **characterised in that** it has a power supply device according to one of the preceding claims.

FIG_1

FIG_2

FIG_3

FIG_4

FIG_5

FIG_6